# EUROPEAN PATENT APPLICATION

(11) **EP 4 496 296 A1**
(43) Date of publication of application: **22.01.2025**
(21) Application number: 23216899.7
(22) Date of filing: 14.12.2023
(51) Int. Cl.: H04L 69/165, G06F 15/173, G06F 9/50, G06F 9/54

(54) **IN-NETWORK COLLECTIVE OPERATIONS**

(30) Priority: 17.07.2023 US 202318222946
(71) Applicant: INTEL Corporation, Santa Clara, CA 95054 (US)
(72) Inventor: KASHYAP, Vivek, Santa Clara, 95054 (US); SAPIO, Amedeo, Santa Clara, 95054 (US)
(74) Representative: Rummler, Felix

(57) **Abstract**

Examples described herein relate to a switch comprising circuitry configured to for packet communications associated with a collective operation to train machine learning (ML) models: utilize a reliable transport protocol for communications from at least one worker node of the collective operation to a switch, wherein the utilize a reliable transport protocol for communications from at least one worker node of the collective operation to the switch comprises store packet receipt state for per-packet communications from the at least one worker node of the collective operation to the switch and utilize a non-reliable transport protocol by the switch to a device that is to perform aggregation of results, wherein the reliable transport protocol comprises a different protocol than that of the non-reliable transport protocol.

## Description

### BACKGROUND

Machine Learning (ML) or High performance computing (HPC) clusters utilize multitudes of servers and graphics processing unit (GPUs) or Tensor Processing Units (TPUs). Collective operations can be performed on data transmitted through a network at different switches. These systems are used to train ML models using iterative algorithms such as stochastic gradient descent. Input data is partitioned across workers and multiple iterations are performed over the training data. At each iteration, workers compute an update to the ML model parameters based on a subset of local data and an intermediate current model. The workers then communicate their results to be aggregated into a model update and the aggregate update is summed for model parameters at the nodes for the next iteration. These iterations are performed multiple times (epochs) over an entire dataset.

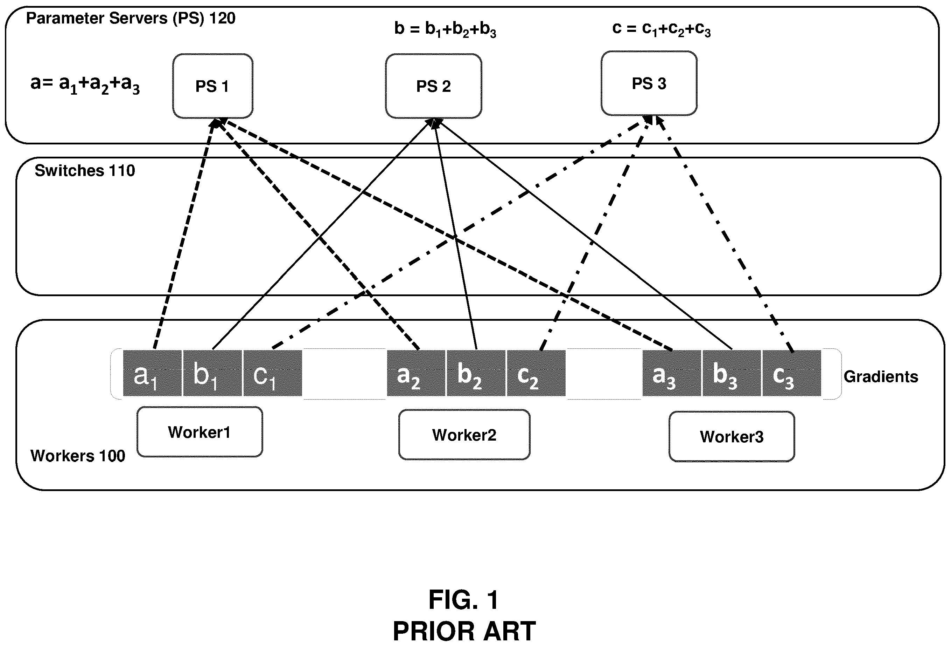

A parameter server (PS) can be utilized for collective operations whereby worker nodes compute updates and send updates to the PS. The PS pushes the aggregated data or the data is pulled from PS servers. FIG. 1 shows an end-to-end solution for machine learning (ML) training using a PS architecture. PS architecture includes workers 100 and parameter servers (PS) 120 that are communicatively coupled using switches 110. An end-to-end solution for PS architecture includes reduce-scatter and Allgather operators. FIG. 1 shows that Worker1 has three queue pairs (QPs), and each QP connects to a PS. Worker2 and Worker3 also utilize three QPs, and each QP connects to a PS.

In the reduce-scatter operator, a worker sends a partition of the data to a corresponding parameter server. For example, partition a1 from Worker1, a2 from Worker2 and a3 from Worker3 are sent to PS1, whereas partition b1 from worker1, b2 from worker2, and b3 from worker3 are sent to PS2. A similar pattern applies to the PS3. As a result, the data are scattered across multiple parameter servers to leverage the parallel computation of graphics processing units (GPUs) located at a parameter server. After receiving the data, the PS first performs aggregation over the data from the workers.

In the Allgather operator, the data that are processed by a GPU are multicast to the workers. A parameter server sends the same copy of the data to the workers. In this process, the bandwidth from one PS is distributed to all the workers, and the network could be the bottleneck.

### BRIEF DESCRIPTION OF THE DRAWINGS

FIG. 1 shows an end-to-end solution for machine learning (ML) training using a parameter server (PS) architecture.
FIG. 2 depicts an example topology.
FIG. 3 depicts an example system.
FIG. 4 depicts an example of buffer management.
FIG. 5 depicts an example process.
FIG. 6 depicts an example network interface device or packet processing device.
FIGs. 7A-7C depict example switches.
FIG. 8 depicts an example system.

### DETAILED DESCRIPTION

In collective operations that utilize in-network aggregation (INA) to offload collective operations for ML workloads to network interface devices, such as switches, the network interface devices can perform operations of a parameter server (PS) and be connected in a tree, mesh, or other arrangements. An endpoint switch can communicate with worker nodes using a reliable transport protocol and the endpoint switch can maintain connection state information for packet communications to or from the worker nodes. The endpoint switch can aggregate data from the worker nodes by performing one or more of SUM, SUBTRACT, MIN, MAX, MULTIPLY, etc.. The endpoint switch can perform floating point operations as part of data processing. The endpoint switch can be connected with at least one other switch using a non-reliable protocol and may not store connection state information for packet communications to or from the at least one other switch. The endpoint switch can utilize best efforts in communicating with the at least one other switch and may not re-transmit packets that were not received by the at least one other switch. In some examples, the endpoint switch can utilize a first protocol to communicate with the worker nodes and a second protocol to communicate with the at least one other switch and the first and second protocols can be different. The at least one other switch can aggregate data from at least the switch such as one or more of SUM, SUBTRACT, MIN, MAX, MULTIPLY, etc..

While waiting for a reduction summation response, the endpoint switch need not store connection state (e.g., acknowledgement of packet receipt) or utilize a timer to determine whether to re-transmit data to the at least one other switch. The at least one other switch can provide processed data, from a root node switch, to the endpoint switch to forward to at least one worker node. Acknowledgements or indications of packet receipt by the at least one other switch to the endpoint switch can occur based on receipt of the processed data and identifiers of data sent by the endpoint switch for generating the processed data. Accordingly, memory and processor usage in the endpoint switch can be reduced by storing state for connections with worker nodes but not upstream switches.

A reliable transport protocol can include a connection-oriented protocol whereby a receiver confirms data receipt to a data sender and after a timeout interval, the sender attempts retransmission of undelivered data and/or the sender delays data transmission based on detected network congestion. Non-limiting examples of reliable transport protocols include remote direct memory access in reliable mode (RDMA Reliable Connection (RC)), InfiniBand, Transmission Control Protocol (TCP) (e.g., Internet Engineering Task Force (IETF) RFC 793 (1981), quick UDP Internet Connections (QUIC), RoCEv2, Amazon's scalable reliable datagram (SRD), Amazon AWS Elastic Fabric Adapter (EFA), Microsoft Azure Distributed Universal Access (DUA) and Lightweight Transport Layer (LTL), Google GCP Snap Microkernel Pony Express, High Precision Congestion Control (HPCC) (e.g., Li et al., "HPCC: High Precision Congestion Control" SIGCOMM (2019)), improved RoCE NIC (IRN) (e.g., Mittal et al., "Revisiting network support for RDMA," SIGCOMM 2018), Homa (e.g., Montazeri et al.,"Homa: A Receiver-Driven Low-Latency Transport Protocol Using Network Priorities," SIGCOMM 2018), NDP (e.g., Handley et al., "Re-architecting Datacenter Networks and Stacks for Low Latency and High Performance," SIGCOMM 2017), EQDS (e.g., Olteanu et al., "An edge-queued datagram service for all datacenter traffic," USENIX 2022), or others.

A non-reliable transport protocol can include a connectionless protocol whereby a sender sends data best efforts but a receiver does not confirm data receipt to the sender. Non-limiting examples of non-reliable transport protocols include User Datagram Protocol (UDP) (e.g., IETF RFC 768 (1980)), Internet Protocol (IP), remote direct memory access in unreliable mode (RDMA Unreliable Connection (UC) and Unreliable Datagram (UD)).

In some examples, a switch or a network interface device can refer to one or more of: a network interface controller (NIC), a remote direct memory access (RDMA)-enabled NIC, SmartNIC, router, switch, forwarding element, infrastructure processing unit (IPU) with a programmable packet processing pipeline, data processing unit (DPU), or edge processing unit (EPU). An edge processing unit (EPU) can include a network interface device that utilizes processors and accelerators (e.g., digital signal processors (DSPs), signal processors, or wireless specific accelerators for Virtualized radio access networks (vRANs), cryptographic operations, compression/decompression, and so forth).

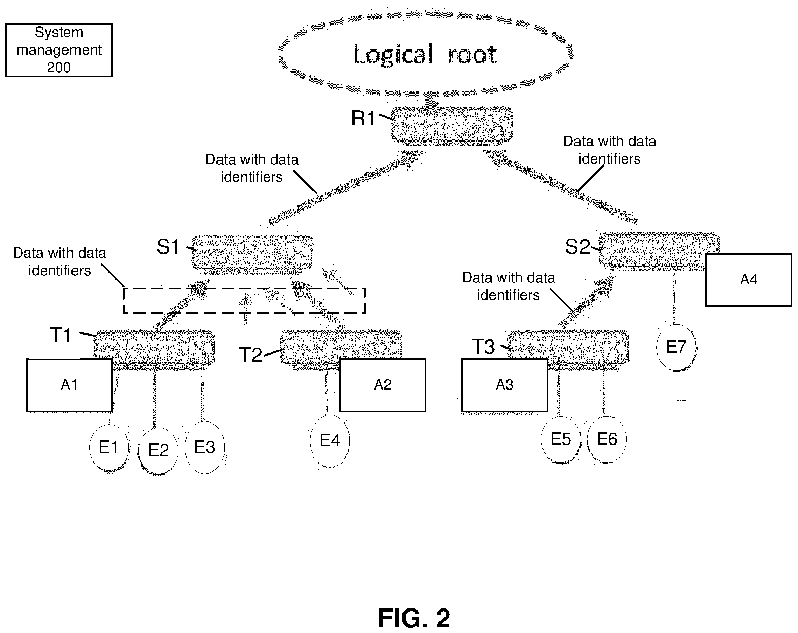

FIG. 2 depicts an example topology. System management 200 can determine devices to associate with nodes of a logical tree and assigning a logical root and an aggregation ID (A-id) to the logical tree. Determination of devices to associate with nodes of a logical tree may utilize a topology service that probes for devices using Simple Network Management Protocol (SNMP) probes or Link Layer Detection Protocol (LLDP). A primary value of the A-id can represent a logical root logical address (RA) to which the workers send their data. The A-id can include the edge nodes or workers marked with E and the switches marked as T and S and the root of the tree R. This logical topology can be different than the physical topology, as there can be other switches in the network that do not participate in the aggregation tree and forward traffic towards the next upstream node of the aggregation tree. In some examples, system management 200 can execute on a server or network interface device.

System management 200 can configure worker nodes and switches with multicast routes and memberships along one or paths of a multicast tree. The set of worker nodes that are to participate in a collective operation can form a logical tree. System management 200 can determine switches that form the logical tree and determine the root switch of the logical tree. Tree members can be initialized with rules (e.g., applicable protocol, packet forwarding rules, number of packets to aggregate together) and start values (e.g., initial starting sequence numbers to synchronize data sent by different workers, source Internet Protocol (IP) address, and destination IP address) for the aggregation tree. In some examples, worker nodes E1 to E7 can be assigned a same source IP address. In some examples, a destination IP address can refer to an aggregation receiver (AR), described herein.

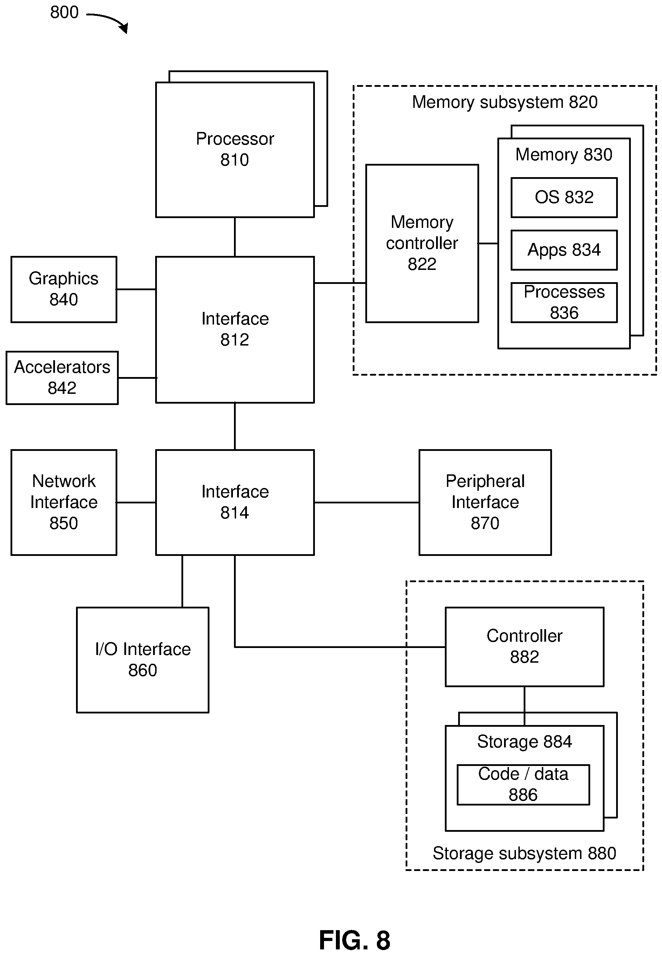

In the example of FIG. 2, worker nodes E1 to E3 can be communicatively coupled to a first hop switch T1. Worker node E4 can be communicatively coupled to a first hop switch T2. Worker nodes E5 to E6 can be communicatively coupled to a first hop switch T3. Worker node E7 can be communicatively coupled to a first hop switch S2. Various examples of circuitry and software in worker nodes are described with respect to FIG. 8.

A worker node can be initialized to connect to the logical root at the logical root address (R1), but an endpoint switch (e.g., T1, T2, T3, or S2) can form a reliable transport connection with the worker node. The endpoint switch can simulate completion of the connection with R1 for connection establishment handshake packets prior to data transmission (e.g., SYN (synchronization) and ACK (acknowledgment) packets), as the established connection can be offloaded to a flow table in the endpoint switch. Worker nodes E1 to E7 can transmit packets with a final Internet Protocol (IP) root address for R1 to endpoint switches T1, T2, T3, or S2 for forwarding to R1.

Switch T1 can perform operations on aggregated data from workers E1 to E3. Switch T2 can perform operations on aggregated data from worker E4. Switch T3 can perform operations on aggregated data from workers E5 and E6. Switches T1 and T2 can be communicatively coupled to a switch S1. Switch T3 can be communicatively coupled to a switch S2. Worker nodes can transmit metadata in packet headers to switches, where metadata is to identify data ID, set of nodes that participate in job (e.g., group identifier 1 (E1-E7), group identifier 2 (E8-E10) (not shown), etc.).

Switch S1 can perform operations on aggregated data from switches T1 and T2. Switch S2 can perform operations on aggregated data from switch T3 and worker E7. Switches S1 and S 2 can be communicatively coupled to a root node switch R1. Root switch R1 (logical root) can perform operations on aggregated data from switches S1 and S2. Operations can include one or more of SUM, SUBTRACT, MIN, MAX, MULTIPLY, etc..

As described herein, switch T1 can utilize Aggregation Receiver (AR) A1 to perform a reliable transport protocol for communications to and from workers E1 - E3. Switch T2 can utilize AR A2 to perform a reliable transport protocol for communications to and from worker E4. Switch T3 can utilize AR A3 to perform a reliable transport protocol for communications to and from workers E5 and E6. Switch S2 can utilize AR A4 to perform a reliable transport protocol for communications to and from worker E7. ARs A1-A4 can be implemented as one or more of virtual machine (VM) or container executed by a host connected via a host interface, VM or container executed by processor of corresponding switch, circuitry in a corresponding switch, or others. In some examples, communications from workers' network interface devices to endpoint switches can utilize a reliable transport protocol to provide a reliable communication for data from workers and results that are provided to workers.

For example, one or more of A1 - A4 can execute a TCP stack to maintain TCP connection state for communications with worker nodes. Connection state can include one or more of: initial sequence number, number of received bytes, received byte sequence number to keep received packets in order, n-tuple (e.g., source address, destination address, IP protocol, transport layer source port, and/or destination port), connection flags, or others. Endpoint switches can send data receipt acknowledgements (ACK) to worker nodes to indicate receipt of packets transmitted by worker nodes to endpoint switches. In some examples, endpoint switches can generate an ACK based on a stored template ACK packet and adjust an indication of a number of received bytes that is sent to a worker node in an ACK. Use of a template ACK can reduce memory usage and potentially allow more connections for an amount of available memory.

Where RoCE is utilized as a reliable transport protocol, system management 200 can initialize QP numbers and RoCE protocol parameters and the ACK can be responded to per the ACK flag by the worker nodes.

Switch T1 can transmit, to switch S1, aggregated data by use of a non-reliable transport protocol. Switch T1 can accumulate aggregated data for transmission in one or more packets and include packet header values received from E1 to E3, from a reliable transport connection, such as sequence number, number of received bytes, and so forth. Similarly, switch T2 can transmit, to switch S1, aggregated data by use of a non-reliable transport protocol with packet header values received from E4, from a reliable transport connection, such as sequence number, number of received bytes, and so forth. Switch T3 can transmit, to switch S2, aggregated data by use of a non-reliable transport protocol. Switches S1 and S2 can transmit, to switch R1, aggregated data by use of a non-reliable transport protocol. In some cases, reliable transport protocols can be used instead of non-reliable transport protocols.

Switches T1, T2, T3, and S2 can perform one or more operations to combine inputs and send a result to the next switch that combines the data again, and so forth. Root R1 can perform a combination to obtain one final result that is a combination of data from workers E1-E7. Accordingly, one or more of switches T1, T2, T3, or S2 can receive and process data transmitted by a worker node, process the data with other worker data from the same group identifier (A-id), and transmit the resulting processed data to an upstream switch (e.g., S1 or S2). For example, T1 can sum data received from E1 to E3, where data received from E1 to E3 are identified by a same group identifier. For example, T2 can process or forward data received from E4, where data received from E4 are identified by the group identifier. For example, T3 can sum data received from E5 and E6, where data received from E5 and E6 are identified by the group identifier. For example, S2 can sum data received from E7 and T3, where data received from E7 and T3 is identified by the group identifier. In some examples, a group identifier can include a packet sequence number or range of sequence numbers.

Switch T1 can transmit one or more packets with resultant processed data to the next switch (e.g., S1) and S1 may receive additional data from other members of A-id (e.g., data from T2). Switch S2 can transmit one or more packets with resultant processed data to the next switch (e.g., S2) and S2 may receive additional data from other members of A-id (e.g., data from E7). Switches S1 and S2 can provide resulting processed data to root node R1 for processing and aggregation. Node R1 can transmit the aggregated result (e.g., the result of the received accumulated sums) to the edge workers, E1-E7.

Based on multicast routes and membership, R1 can route the packets to the A-id member ARs via an associated switch T. An AR can cause transmission of the packet to the worker endpoints by replicated unicast or by multicast (or broadcast) while utilizing unicast Internet Protocol (IP) address. For example, root R1 can perform aggregation and send results to worker nodes using multicast operations or directed per-hop multicasting whereby S1 multicasts or transmits results to T1 and T2. T1 can multicast or transmits results to E1 - E3. T2 can transmit results to E4. T3 can multicast or transmit results to E5 - E6. S2 can transmit results to E7. For multicast operations, a switch can send replica packet payload with headers that indicate the destination switches. Root switch R1 can include a pipeline or circuitry programmed to replicate packets with results and send replicated packets to ARs, A1 - A4, via respective switches T1, T2, T3, and S2. System management 200 can initialize multicast trees at job setup time. A switch can transmit a packet with a per-job multicast address to cause a receiver switch to perform packet multicast to receivers. After the packet is received by the worker nodes, the worker nodes can terminate the connection or initiate another data cycle. The ARs can recalculate the protocol checksums, when TCP is used, before the packets are transmitted to the worker nodes.

A root switch can perform aggregation of data associated with data identifiers (IDs) provided with data from endpoint switches (e.g., T1, T2, T3, or S2). If no aggregation data is received in certain amount of time from R1 by an endpoint switch with transmitted data identifiers, an AR associated with an endpoint switch can raise an error or cancel the transaction and inform system management 200 to take corrective action by restarting the transaction. Accordingly, an endpoint switch can utilize data IDs to track whether R1 received packets.

The following describes an example operation based on a TCP connection between endpoint switch and worker node. System management 200 can select one of the worker nodes to be the primary worker (PW) for an A-id. The AR associated with the endpoint switch can form a connection with the PW. The PW's ingress port can receive SYN packets to establish a connection. Other workers can receive the SYN with initial send sequence number (ISS) + 1 as a sequence number. Worker nodes can transmit ACKs and a receiver switch (e.g., T1, T2, T3, or S2) can drop ACKs except on the PW port.

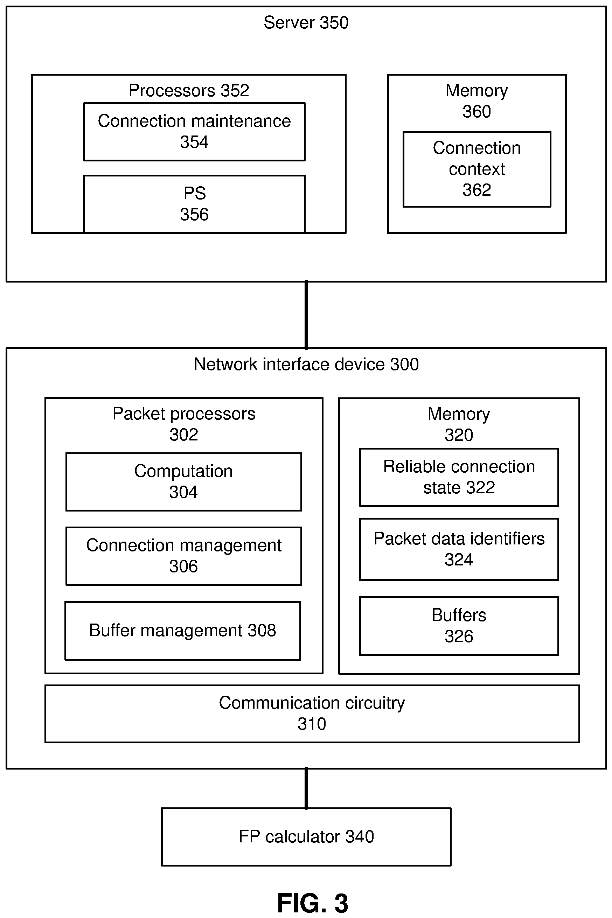

FIG. 3 depicts an example system. The system can be part of a distributed ML or Deep neural network (DNN) system trained to perform inferences consistent with SwitchML or utilize one or more of: Message Passing Interface (MPI), Symmetric Hierarchical Memory Access (SHMEM), Unified Parallel C (UPC), or others. In some examples, network interface device 300 can perform operations of an endpoint switch that is coupled to one or more worker nodes, as described herein. In some examples, network interface device 300 can perform operations of an aggregation receiver, as described herein. In some examples, network interface device 300 can perform operations of a parameter server, as described herein.

Network interface device 300 can utilize communication circuitry 310 for communications with other devices over a network or fabric via one or more ports. Communication circuitry 310 may be configured to use any one or more communication technology (e.g., wired or wireless communications) and associated protocols (e.g., Ethernet, Bluetooth^{®}, Wi-Fi^{®}, 4G LTE, 5G, etc.) to perform such communication. Communication circuitry 310 can include one or more network hardware resources, such as ingress queues, egress queues, direct memory access (DMA) circuitry, crossbars, shared memory switches, media access control (MAC), physical layer interface (PHY), Ethernet port logic, and other network hardware resources.

Network interface device 300 can utilize packet processors 302 to process received packets and to prepare packets for transmission. For example, packet processors 302 can perform computation 304 including one or more of: summation of packet data with other packet data from other workers, multiplication, division, minimum, maximum, or other data computation operations related to Allreduce, Reduce Scatter, or Allgather. Computation 304 can utilize circuitry to perform operations on floating point format data, as described herein. Packet header and/or packet data can be stored in memory 320.

Computation 304 can perform operations on data types and precision used by ML applications. Computation 304 can perform operations on data of a variety of operand precisions including single precision floating-point (e.g., 32 bits), half-precision floating point (e.g., 16 bits), custom floating point formats (e.g., BF16), integer words (16 bits), bytes (8 bits), and half-bytes (4 bits). Matrix elements may be stored at different precisions depending on the particular implementation, including 16-bit words, 8-bit bytes (e.g., INT8) and 4-bit half-bytes (e.g., INT4). To support in-network aggregation for ML applications, computation 304 can perform calculations and arithmetic based on floating point (FP) values and other data formats, as ML workloads may share floating points tensor updates. Computation 304 can utilize a floating point calculator 340 that supports FP and integer arithmetic in the data path. Computation 304 can be implemented as a network accessible FP calculator 340 that includes an application specific circuit (ASIC) and/or field programmable gate array (FPGA), that receives data and provides an FP format data at an output port to network interface device 300 to forward to the target egress port.

For example, FP calculator 340 can perform vectorial floating point in parallel and provide FP data values in a packet of the maximum size (MTU) to network interface device 300. FP calculator 340 can store a value in memory for a first received packet or retrieve the value from memory, aggregate (e.g., sum) this value with a value in the packet, and store the result back in the same memory location. For example, FP calculator 340 can drop packets, except for the last packets of a round of aggregation and FP calculator 340 can read the final results from memory and write the final result into packets, which can be sent back to network interface device 300 to be forwarded to the next node in the aggregation tree. In some examples, FP calculator 340 can be integrated into network interface device 300 in a same system on chip (SoC) or die as that of packet processors 302.

For example, packet processors 302 can perform connection management 306 including managing connections with a worker node or network interface device, such as a switch. For example, connection management 306 can generate and utilize reliable connection state 322 to manage communications with a worker node to indicate packet receipt. For example, reliable connection state 322 can include a number of received bytes, received packet sequence number to keep received packets in order, A-id, or other metadata. For example, connection management 306 can utilize packet data identifiers 324 to identify whether to re-transmit data to a root switch or intermediary switch. For example, packet data identifiers 324 can identify data transmitted to a root switch and whether computations from the root switch are based on the data transmitted. Based on not receiving computations from the root switch with a data identifier of data transmitted to the root switch or intermediary switch, connection management 306 can cause re-transmission of the data associated with the data identifier to the root switch. In some examples, packet data identifiers 324 can include a packet sequence number or range of packet sequence numbers.

For example, packet processors 302 can perform buffer management 308 to count data stored in data slots in buffers 326 using counters or registers to determine when an aggregation is complete, and to determine when computed data can be sent to the next switch in the tree. Buffer management 308 can release a set of data for transmission based on receipt of a packet to fill a data gap that can arise when packets are received out-of-order. To drain the list of completed slots, buffer management 308 can cause transmission of a packet with the data from a slot and generate (e.g., by packet replication) a second packet that is recirculated through packet processors 302, until there are no remaining full slots.

A flow can be a sequence of packets transmitted between two endpoints, generally representing a single session using a known protocol. Accordingly, a flow can be identified by a set of defined tuples and, for routing purpose, a flow is identified by the two tuples that identify the endpoints, e.g., the source and destination addresses. For content-based services (e.g., load balancer, firewall, intrusion detection system, etc.), flows can be differentiated at a finer granularity by using N-tuples (e.g., source address, destination address, IP protocol, transport layer source port, and destination port). A packet in a flow is expected to have the same set of tuples in the packet header. A packet flow to be controlled can be identified by a combination of tuples (e.g., Ethernet type field, source and/or destination IP address, source and/or destination User Datagram Protocol (UDP) ports, source/destination TCP ports, or any other header field) and a unique source and destination queue pair (QP) number or identifier. A packet may be used herein to refer to various formatted collections of bits that may be sent across a network, such as Ethernet frames, IP packets, TCP segments, UDP datagrams, etc. Also, as used in this document, references to L2, L3, L4, and L7 layers (layer 2, layer 3, layer 4, and layer 7) are references respectively to the second data link layer, the third network layer, the fourth transport layer, and the seventh application layer of the OSI (Open System Interconnection) layer model.

Reference to flows can instead or in addition refer to tunnels (e.g., Multiprotocol Label Switching (MPLS) Label Distribution Protocol (LDP), Segment Routing over IPv6 dataplane (SRv6) source routing, VXLAN tunneled traffic, GENEVE tunneled traffic, virtual local area network (VLAN)-based network slices, technologies described in Mudigonda, Jayaram, et al., "Spain: Cots data-center ethernet for multipathing over arbitrary topologies," NSDI. Vol. 10. 2010 (hereafter "SPAIN"), and so forth.

Worker nodes can perform collective operation with data of the same size, and corresponding packets from different worker nodes (with payloads that are to be aggregated together) can be a same size. A data slot in buffers 326 can store the intermediate data resulting from the payload aggregation and can store metadata that specifies data length, so that when the final result is retrieved, network interface device 300 can determine an actual payload size to generate.

For example, after computation 304, buffer slots can be filled with data from worker nodes and data in the buffer slots can be summed. Computation 304 can perform summation as per the operation associated with an A-id operation (e.g., SUM, MIN, MAX, etc.) defined for an A-id (e.g., defined by system management 200). There can be multiple data slots per port for flow control. Computation 304 can provide the summation into a packet and send the packet upstream to an upstream switch.

Operation of packet processors 302 can be programmed using one or more of: a configuration file, OneAPI, Programming protocol independent packet processors (P4), Software for Open Networking in the Cloud (SONiC), Broadcom^{®} Network Programming Language (NPL), NVIDIA^{®} CUDA^{®}, NVIDIA^{®} DOCA^{™}, Data Plane Development Kit (DPDK), OpenDataPlane (ODP), Infrastructure Programmer Development Kit (IPDK), eBPF, x86 compatible executable binaries or other executable binaries.

Server 350 can be coupled to network interface device 300 using a device interface or network connection, examples of which are described herein. Server 350 can include processors 352, memory 360, and other technologies described herein at least with respect to the system of FIG. 8. In some examples, processors 352 can perform connection maintenance 354 to manage connections between workers (not shown). For example, connection maintenance 354 can acknowledge packet receipt to a sender and identify if a packet sequence number is not received from a sender and request packet re-transmission based on connection context 362 stored in memory 360.

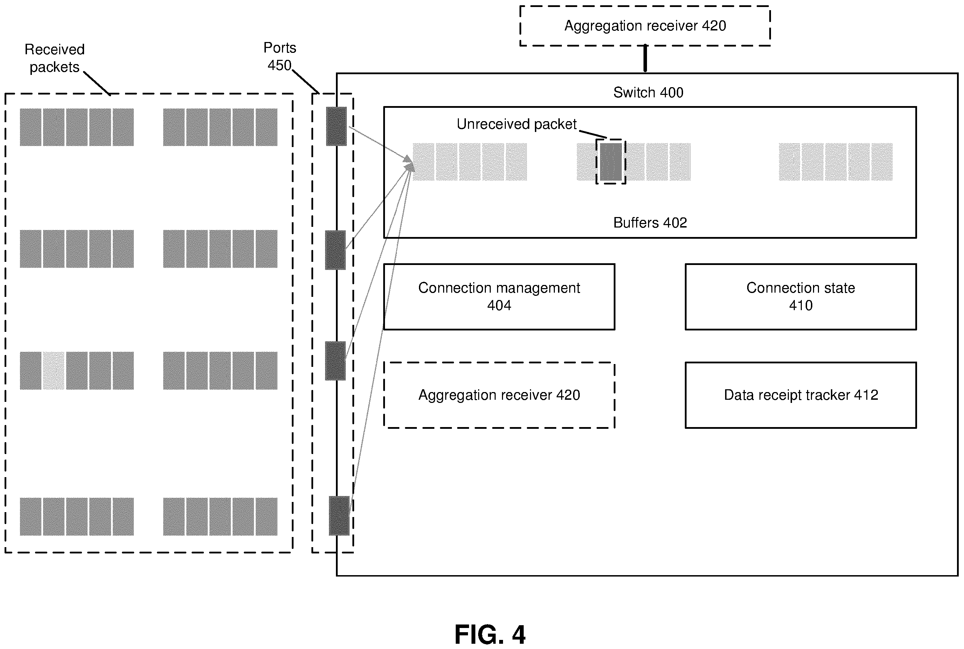

FIG. 4 depicts an example of buffer management. Switch 400 can manage use of buffers 402 as described herein. Buffers 402 can store header and/or data from packets received from worker nodes (e.g., Ex, where x is an integer) and aggregation data from upstream switches (e.g., Sx, Rx). Connection management 404 can store status of received packets from a connection with a worker node in connection state 410. Connection state 410 can include one or more of: number of received bytes, received packet sequence number to keep received packets in order, and so forth. The number of slots in buffers 402 can be set for an A-id.

In some examples, worker nodes can be configured to send packets with a same starting sequence number and increase sequence numbers for subsequent packets. For example, workers E1 to E3 can send packets to different ports of T1 with a same sequence number for data that are to be processed and aggregated by T1. However, based on receipt of packets with a same sequence number for all of E1 to E3, T1 can process and aggregate the data from the packets with a same sequence number for all of E1 to E3 and transmit one or more packets with the aggregated data to S1. Sequence numbers from different packets can be used to identify data that are to be aggregated. Similarly, based on receipt of packets with a same sequence number for all of E5 to E6, T3 can process and aggregate the data from the packets with a same sequence number for all of E5 to E6 and transmit one or more packets with the aggregated data to S2.

However, based on non-receipt of a packet of a sequence number, an endpoint switch (e.g., T1, T2, T3, or S2) can reserve a buffer entry for the packet with unreceived sequence number and wait for retransmission of the packet with unreceived sequence number prior to sending the aggregation of data of packets with same sequence number to an upstream switch. For example, if T1 receives packets with sequence numbers 1 to 4 from E1 to E3 and receives packets with sequence number 5 from E1 and E2 but not E3, T1 can reserve one or more buffers for packets with sequence number 5 from E3. After re-transmission or receipt of the packet with sequence number 5 from E3 and receipt of such re-transmitted packet at T1, T1 can process and aggregate the data from the one or more packets with sequence number 5 and transmit the aggregated data associated with sequence number 5 to S1.

If no space is available in buffers 402 to store packet content (e.g., header and/or payload) from a worker node, a received packet can be dropped, and an ACK is not sent to a worker node. A worker node may resend a packet for which an ACK was not received within a time limit. Connection management 404 may not send ACKs to other worker nodes, or otherwise cause other worker nodes to pause packet transmission until the dropped packet is re-received.

Connection management 404 can indicate receipt of a packet by transmission of an ACK to a sender worker node, which can trigger the sender worker node to send one or more additional packets. Switch 400 can send ACKs to worker node to refer to receipt of multiple packets, up to and including the packet for which receipt is acknowledged.

For example, data receipt tracker 412 can indicate whether data identifiers (e.g., packet sequence numbers) transmitted to upstream switches have been returned in aggregation data from upstream switches. In some examples, if an AR 420 does not receive a result from logical root node within a pre-set time window with a transmitted data identifier, connection management 404 can cause re-transmission of a packet with data associated with the transmitted data identifier. In some examples, if an AR 420 does not receive a result from logical root node within a pre-set time window with a transmitted data identifier, AR 420 may cancel a transaction and notify the worker nodes to abort the operation and close the connection. System management can initiate a new or another transaction from the worker nodes.

In some examples, AR 420 can be implemented as a processor-executed software or circuitry in switch 400 or as a processor-executed software or circuitry in a host connected to switch 400 via a host interface (e.g., Peripheral Component Interconnect express (PCIe) or Compute Express Link (CXL)).

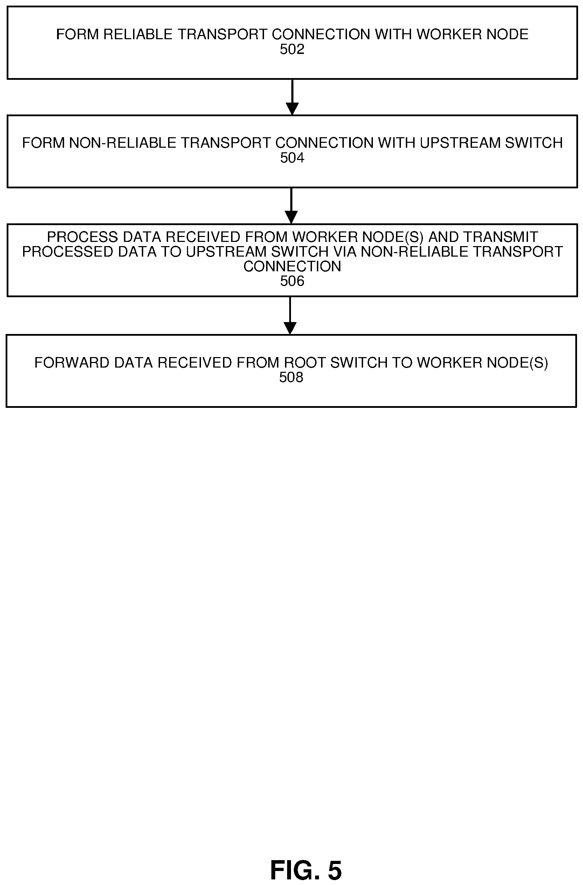

FIG. 5 depicts an example process. The process can be performed by a network interface device. At 502, a network interface device can form a communication connection with one or more worker nodes based on a reliable transport protocol. For example, the reliable transport protocol can track receipt of packets from the one or more worker nodes and indicate receipt of packets to the one or more worker nodes. The one or more worker nodes can re-transmit packets that were not indicated as received to the network interface device.

At 504, the network interface device can form a communication connection with an upstream switch based on a reliable transport protocol. For example, the non-reliable transport protocol can track receipt of packets by upstream switches by tracking transmitted data identifiers. Based on non-receipt of transmitted data identifiers, packets associated with data identifiers that are not sent with computations based on aggregation data to the network interface device can be re-sent, an error can be raised, or the transaction can be canceled and system management can take corrective action.

At 506, the network interface device can process data received from one or more worker nodes. For example, the network interface device can perform aggregation operations on the received data and forward the aggregated data to an upstream switch. At 508, the network interface device can receive aggregated data from a root switch. The network interface device can forward the aggregated data to one or more worker nodes.

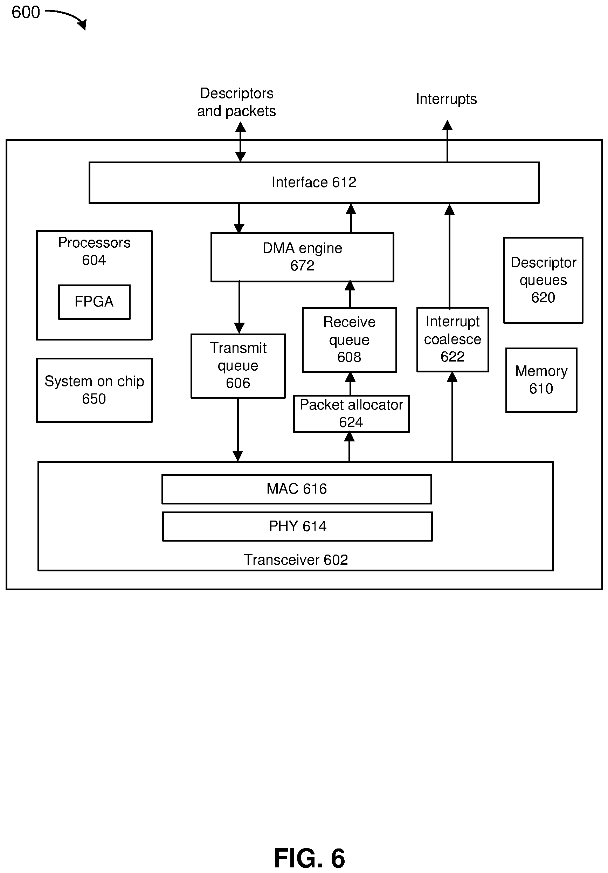

FIG. 6 depicts an example network interface device or packet processing device. In some examples, circuitry of network interface device can be utilized to perform an aggregation receiver, connect with worker nodes or switches, and/or communicate using reliable or non-reliable transport protocols, as described herein. In some examples, packet processing device 600 can be implemented as a network interface controller, network interface card, a host fabric interface (HFI), or host bus adapter (HBA), and such examples can be interchangeable. Packet processing device 600 can be coupled to one or more servers using a bus, PCIe, CXL, or Double Data Rate (DDR). Packet processing device 600 may be embodied as part of a system-on-a-chip (SoC) that includes one or more processors, or included on a multichip package that also contains one or more processors.

Some examples of packet processing device 600 are part of an Infrastructure Processing Unit (IPU) or data processing unit (DPU) or utilized by an IPU or DPU. An xPU can refer at least to an IPU, DPU, GPU, GPGPU, or other processing units (e.g., accelerator devices). An IPU or DPU can include a network interface with one or more programmable or fixed function processors to perform offload of operations that could have been performed by a CPU. The IPU or DPU can include one or more memory devices. In some examples, the IPU or DPU can perform virtual switch operations, manage storage transactions (e.g., compression, cryptography, virtualization), and manage operations performed on other IPUs, DPUs, servers, or devices.

Network interface 600 can include transceiver 602, processors 604, transmit queue 606, receive queue 608, memory 610, and bus interface 612, and DMA engine 652. Transceiver 602 can be capable of receiving and transmitting packets in conformance with the applicable protocols such as Ethernet as described in IEEE 802.3, although other protocols may be used. Transceiver 602 can receive and transmit packets from and to a network via a network medium (not depicted). Transceiver 602 can include PHY circuitry 614 and media access control (MAC) circuitry 616. PHY circuitry 614 can include encoding and decoding circuitry (not shown) to encode and decode data packets according to applicable physical layer specifications or standards. MAC circuitry 616 can be configured to assemble data to be transmitted into packets, that include destination and source addresses along with network control information and error detection hash values.

Processors 604 can be any a combination of a: processor, core, graphics processing unit (GPU), field programmable gate array (FPGA), application specific integrated circuit (ASIC), or other programmable hardware device that allow programming of network interface 600. For example, a "smart network interface" can provide packet processing capabilities in the network interface using processors 604.

Processors 604 can include one or more packet processing pipeline that can be configured to perform match-action on received packets to identify packet processing rules and next hops using information stored in a ternary content-addressable memory (TCAM) tables or exact match tables in some embodiments. For example, match-action tables or circuitry can be used whereby a hash of a portion of a packet is used as an index to find an entry. Packet processing pipelines can perform one or more of: packet parsing (parser), exact match-action (e.g., small exact match (SEM) engine or a large exact match (LEM)), wildcard match-action (WCM), longest prefix match block (LPM), a hash block (e.g., receive side scaling (RSS)), a packet modifier (modifier), or traffic manager (e.g., transmit rate metering or shaping). For example, packet processing pipelines can implement access control list (ACL) or packet drops due to queue overflow.

Configuration of operation of processors 604, including its data plane, can be programmed based on one or more of: Protocol-independent Packet Processors (P4), Software for Open Networking in the Cloud (SONiC), Broadcom^{®} Network Programming Language (NPL), NVIDIA^{®} CUDA^{®}, NVIDIA^{®} DOCA^{™}, Infrastructure Programmer Development Kit (IPDK), among others.

Packet allocator 624 can provide distribution of received packets for processing by multiple CPUs or cores using timeslot allocation described herein or RSS. When packet allocator 624 uses RSS, packet allocator 624 can calculate a hash or make another determination based on contents of a received packet to determine which CPU or core is to process a packet.

Interrupt coalesce 622 can perform interrupt moderation whereby network interface interrupt coalesce 622 waits for multiple packets to arrive, or for a time-out to expire, before generating an interrupt to host system to process received packet(s). Receive Segment Coalescing (RSC) can be performed by network interface 600 whereby portions of incoming packets are combined into segments of a packet. Network interface 600 provides this coalesced packet to an application.

Direct memory access (DMA) engine 652 can copy a packet header, packet payload, and/or descriptor directly from host memory to the network interface or vice versa, instead of copying the packet to an intermediate buffer at the host and then using another copy operation from the intermediate buffer to the destination buffer.

Memory 610 can be any type of volatile or non-volatile memory device and can store any queue or instructions used to program network interface 600. Transmit queue 606 can include data or references to data for transmission by network interface. Receive queue 608 can include data or references to data that was received by network interface from a network. Descriptor queues 620 can include descriptors that reference data or packets in transmit queue 606 or receive queue 608. Bus interface 612 can provide an interface with host device (not depicted). For example, bus interface 612 can be compatible with PCI, PCI Express, PCI-x, Serial ATA, and/or USB compatible interface (although other interconnection standards may be used).

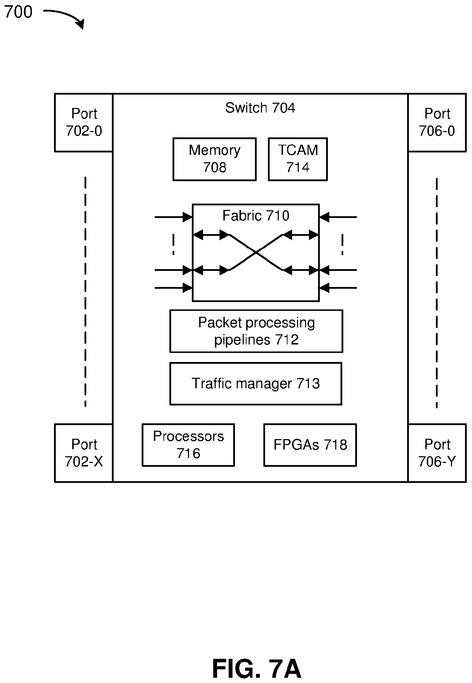

FIG. 7A depicts an example switch. Various examples can be used in or with the switch to perform operations of an aggregation receiver, connect with worker nodes or switches, and/or communicate using reliable or non-reliable transport protocols, as described herein. Switch 704 can route packets or frames of any format or in accordance with any specification from any port 702-0 to 702-X to any of ports 706-0 to 706-Y (or vice versa). Any of ports 702-0 to 702-X can be connected to a network of one or more interconnected devices. Similarly, any of ports 706-0 to 706-Y can be connected to a network of one or more interconnected devices.

In some examples, switch fabric 710 can provide routing of packets from one or more ingress ports for processing prior to egress from switch 704. Switch fabric 710 can be implemented as one or more multi-hop topologies, where example topologies include torus, butterflies, buffered multi-stage, etc., or shared memory switch fabric (SMSF), among other implementations. SMSF can be any switch fabric connected to ingress ports and egress ports in the switch, where ingress subsystems write (store) packet segments into the fabric's memory, while the egress subsystems read (fetch) packet segments from the fabric's memory.

Memory 708 can be configured to store packets received at ports prior to egress from one or more ports. Packet processing pipelines 712 can include ingress and egress packet processing circuitry to respectively process ingressed packets and packets to be egressed. Packet processing pipelines 712 can determine which port to transfer packets or frames to using a table that maps packet characteristics with an associated output port. Packet processing pipelines 712 can be configured to perform match-action on received packets to identify packet processing rules and next hops using information stored in a ternary content-addressable memory (TCAM) tables or exact match tables in some examples. For example, match-action tables or circuitry can be used whereby a hash of a portion of a packet is used as an index to find an entry (e.g., forwarding decision based on a packet header content). Packet processing pipelines 712 can implement access control list (ACL) or packet drops due to queue overflow. Packet processing pipelines 712 can be configured to perform an aggregation receiver, connect with worker nodes or switches, and/or communicate using reliable or non-reliable transport protocols, as described herein. Configuration of operation of packet processing pipelines 712, including its data plane, can be programmed using P4, C, Python, Broadcom Network Programming Language (NPL), or x86 compatible executable binaries or other executable binaries. Processors 716 and FPGAs 718 can be utilized for packet processing or modification.

Traffic manager 713 can perform hierarchical scheduling and transmit rate shaping and metering of packet transmissions from one or more packet queues. Traffic manager 713 can perform congestion management such as flow control, congestion notification message (CNM) generation and reception, priority flow control (PFC), and others.

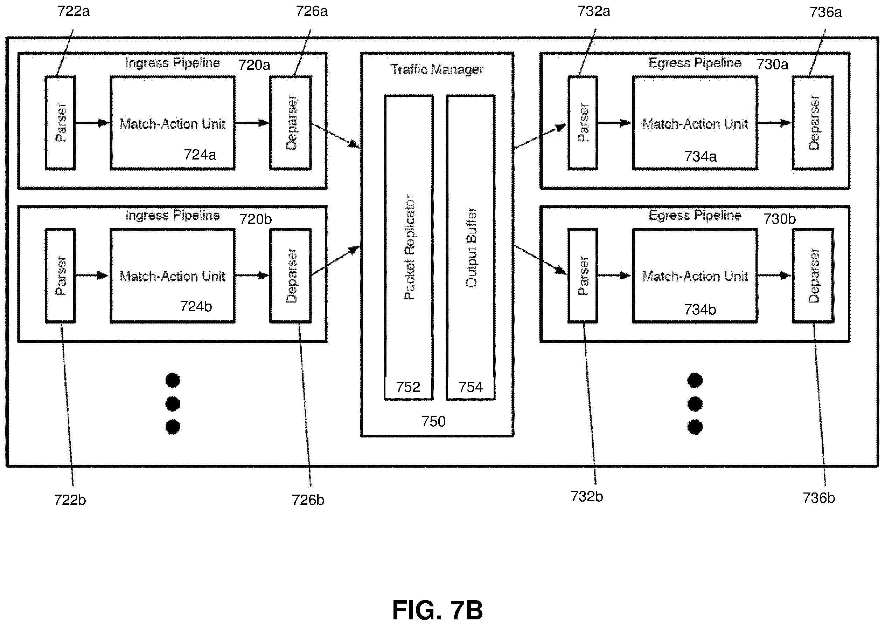

FIG. 7B depicts an example network forwarding system that can be used as a network interface device or router. Forwarding system can perform operations of an aggregation receiver, connect with worker nodes or switches, and/or communicate using reliable or non-reliable transport protocols, as described herein. For example, FIG. 7B illustrates several ingress pipelines 720, a traffic management unit (referred to as a traffic manager) 750, and several egress pipelines 730. Though shown as separate structures, in some examples the ingress pipelines 720 and the egress pipelines 730 can use the same circuitry resources.

Operation of pipelines can be programmed using Programming Protocol-independent Packet Processors (P4), C, Python, Broadcom NPL, or x86 compatible executable binaries or other executable binaries. In some examples, the pipeline circuitry is configured to process ingress and/or egress pipeline packets synchronously, as well as non-packet data. That is, a particular stage of the pipeline may process any combination of an ingress packet, an egress packet, and non-packet data in the same clock cycle. However, in other examples, the ingress and egress pipelines are separate circuitry. In some of these other examples, the ingress pipelines also process the non-packet data.

In some examples, in response to receiving a packet, the packet is directed to one of the ingress pipelines 720 where an ingress pipeline may correspond to one or more ports of a hardware forwarding element. After passing through the selected ingress pipeline 720, the packet is sent to the traffic manager 750, where the packet is enqueued and placed in the output buffer 754. In some examples, the ingress pipeline 720 that processes the packet specifies into which queue the packet is to be placed by the traffic manager 750 (e.g., based on the destination of the packet or a flow identifier of the packet). The traffic manager 750 then dispatches the packet to the appropriate egress pipeline 730 where an egress pipeline may correspond to one or more ports of the forwarding element. In some examples, there is no necessary correlation between which of the ingress pipelines 720 processes a packet and to which of the egress pipelines 730 the traffic manager 750 dispatches the packet. That is, a packet might be initially processed by ingress pipeline 720b after receipt through a first port, and then subsequently by egress pipeline 730a to be sent out a second port, etc.

A least one ingress pipeline 720 includes a parser 722, a chain of multiple match-action units or circuitry (MAUs) 724, and a deparser 726. Similarly, egress pipeline 730 can include a parser 732, a chain of MAUs 734, and a deparser 736. The parser 722 or 732, in some examples, receives a packet as a formatted collection of bits in a particular order, and parses the packet into its constituent header fields. In some examples, the parser starts from the beginning of the packet and assigns header fields to fields (e.g., data containers) for processing. In some examples, the parser 722 or 732 separates out the packet headers (up to a designated point) from the payload of the packet, and sends the payload (or the entire packet, including the headers and payload) directly to the deparser without passing through the MAU processing. Egress parser 732 can use additional metadata provided by the ingress pipeline to simplify its processing.

The MAUs 724 or 734 can perform processing on the packet data. In some examples, the MAUs includes a sequence of stages, with each stage including one or more match tables and an action engine. A match table can include a set of match entries against which the packet header fields are matched (e.g., using hash tables), with the match entries referencing action entries. When the packet matches a particular match entry, that particular match entry references a particular action entry which specifies a set of actions to perform on the packet (e.g., sending the packet to a particular port, modifying one or more packet header field values, dropping the packet, mirroring the packet to a mirror buffer, etc.). The action engine of the stage can perform the actions on the packet, which is then sent to the next stage of the MAU. For example, using MAU(s), packet processing, receipt of worker data, forwarding a packet header from a worker to a server, or insertion of computed result data into packets to be sent to workers, as described herein.

The deparser 726 or 736 can reconstruct the packet using the PHV as modified by the MAU 724 or 734 and the payload received directly from the parser 722 or 732. The deparser can construct a packet that can be sent out over the physical network, or to the traffic manager 750. In some examples, the deparser can construct this packet based on data received along with the PHV that specifies the protocols to include in the packet header, as well as its own stored list of data container locations for each possible protocol's header fields.

Traffic manager (TM) 750 can include a packet replicator 752 and output buffer 754. In some examples, the traffic manager 750 may include other components, such as a feedback generator for sending signals regarding output port failures, a series of queues and schedulers for these queues, queue state analysis components, as well as additional components. Packet replicator 752 of some examples performs replication for broadcast/multicast packets, generating multiple packets to be added to the output buffer (e.g., to be distributed to different egress pipelines).

The output buffer 754 can be part of a queuing and buffering system of the traffic manager in some examples. The traffic manager 750 can provide a shared buffer that accommodates any queuing delays in the egress pipelines. In some examples, this shared output buffer 754 can store packet data, while references (e.g., pointers) to that packet data are kept in different queues for each egress pipeline 730. The egress pipelines can request their respective data from the common data buffer using a queuing policy that is control-plane configurable. When a packet data reference reaches the head of its queue and is scheduled for dequeuing, the corresponding packet data can be read out of the output buffer 754 and into the corresponding egress pipeline 730.

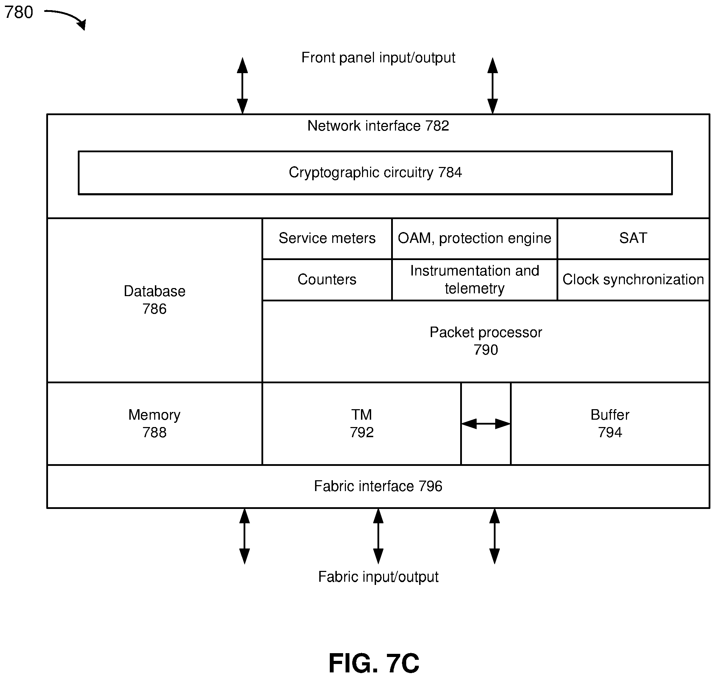

FIG. 7C depicts an example switch. Various examples can be used in or with the switch to perform operations of an aggregation receiver, connect with worker nodes or switches, and/or communicate using reliable or non-reliable transport protocols, as described herein. Switch 780 can include a network interface 780 that can provide an Ethernet consistent interface. Network interface 780 can support for 25 GbE, 50 GbE, 100 GbE, 200 GbE, 400GbE Ethernet port interfaces. Cryptographic circuitry 784 can perform at least Media Access Control security (MACsec) or Internet Protocol Security (IPSec) decryption for received packets or encryption for packets to be transmitted.

Various circuitry can perform one or more of: service metering, packet counting, operations, administration, and management (OAM), protection engine, instrumentation and telemetry, and clock synchronization (e.g., based on IEEE 1588).

Database 786 can store a device's profile to configure operations of switch 780. Memory 788 can include High Bandwidth Memory (HBM) for packet buffering. Packet processor 790 can perform one or more of: decision of next hop in connection with packet forwarding, packet counting, access-list operations, bridging, routing, Multiprotocol Label Switching (MPLS), virtual private LAN service (VPLS), L2VPNs, L3VPNs, OAM, Data Center Tunneling Encapsulations (e.g., VXLAN and NV-GRE), or others. Packet processor 790 can include one or more FPGAs. Buffer 794 can store one or more packets. Traffic manager (TM) 792 can provide per-subscriber bandwidth guarantees in accordance with service level agreements (SLAs) as well as performing hierarchical quality of service (QoS). Fabric interface 796 can include a serializer/de-serializer (SerDes) and provide an interface to a switch fabric.

Operations of components of switches of examples of switches of FIG. 7A, 7B, and/or 7C can be combined and components of the switches of examples of FIG. 7A, 7B, and/or 7C can be included in other examples of switches of examples of FIG. 7A, 7B, and/or 7C. For example, components of examples of switches of FIG. 7A, 7B, and/or 7C can be implemented in a switch system on chip (SoC) that includes at least one interface to other circuitry in a switch system. A switch SoC can be coupled to other devices in a switch system such as ingress or egress ports, memory devices, or host interface circuitry.

FIG. 8 depicts a system. In some examples, circuitry can perform an aggregation receiver, connect with worker nodes or switches, and/or communicate using reliable or non-reliable transport protocols, as described herein. System 800 includes processor 810, which provides processing, operation management, and execution of instructions for system 800. Processor 810 can include any type of microprocessor, central processing unit (CPU), graphics processing unit (GPU), XPU, processing core, or other processing hardware to provide processing for system 800, or a combination of processors. An XPU can include one or more of: a CPU, a graphics processing unit (GPU), general purpose GPU (GPGPU), and/or other processing units (e.g., accelerators or programmable or fixed function FPGAs). Processor 810 controls the overall operation of system 800, and can be or include, one or more programmable general-purpose or special-purpose microprocessors, digital signal processors (DSPs), programmable controllers, application specific integrated circuits (ASICs), programmable logic devices (PLDs), or the like, or a combination of such devices.

In one example, system 800 includes interface 812 coupled to processor 810, which can represent a higher speed interface or a high throughput interface for system components that needs higher bandwidth connections, such as memory subsystem 820 or graphics interface components 840, or accelerators 842. Interface 812 represents an interface circuit, which can be a standalone component or integrated onto a processor die. Where present, graphics interface 840 interfaces to graphics components for providing a visual display to a user of system 800. In one example, graphics interface 840 can drive a display that provides an output to a user. In one example, the display can include a touchscreen display. In one example, graphics interface 840 generates a display based on data stored in memory 830 or based on operations executed by processor 810 or both. In one example, graphics interface 840 generates a display based on data stored in memory 830 or based on operations executed by processor 810 or both.

Accelerators 842 can be a programmable or fixed function offload engine that can be accessed or used by a processor 810. For example, an accelerator among accelerators 842 can provide data compression (DC) capability, cryptography services such as public key encryption (PKE), cipher, hash/authentication capabilities, decryption, or other capabilities or services. In some cases, accelerators 842 can be integrated into a CPU socket (e.g., a connector to a motherboard or circuit board that includes a CPU and provides an electrical interface with the CPU). For example, accelerators 842 can include a single or multi-core processor, graphics processing unit, logical execution unit single or multi-level cache, functional units usable to independently execute programs or threads, application specific integrated circuits (ASICs), neural network processors (NNPs), programmable control logic, and programmable processing elements such as field programmable gate arrays (FPGAs). Accelerators 842 can provide multiple neural networks, CPUs, processor cores, general purpose graphics processing units, or graphics processing units can be made available for use by artificial intelligence (AI) or machine learning (ML) models. For example, the AI model can use or include any or a combination of: a reinforcement learning scheme, Q-learning scheme, deep-Q learning, or Asynchronous Advantage Actor-Critic (A3C), combinatorial neural network, recurrent combinatorial neural network, or other AI or ML model. Multiple neural networks, processor cores, or graphics processing units can be made available for use by AI or ML models to perform learning and/or inference operations.

Memory subsystem 820 represents the main memory of system 800 and provides storage for code to be executed by processor 810, or data values to be used in executing a routine. Memory subsystem 820 can include one or more memory devices 830 such as read-only memory (ROM), flash memory, one or more varieties of random access memory (RAM) such as DRAM, or other memory devices, or a combination of such devices. Memory 830 stores and hosts, among other things, operating system (OS) 832 to provide a software platform for execution of instructions in system 800. Additionally, applications 834 can execute on the software platform of OS 832 from memory 830. Applications 834 represent programs that have their own operational logic to perform execution of one or more functions. Processes 836 represent agents or routines that provide auxiliary functions to OS 832 or one or more applications 834 or a combination. OS 832, applications 834, and processes 836 provide software logic to provide functions for system 800. In one example, memory subsystem 820 includes memory controller 822, which is a memory controller to generate and issue commands to memory 830. It will be understood that memory controller 822 could be a physical part of processor 810 or a physical part of interface 812. For example, memory controller 822 can be an integrated memory controller, integrated onto a circuit with processor 810.

Applications 834 and/or processes 836 can refer instead or additionally to a virtual machine (VM), container, microservice, processor, or other software. Various examples described herein can perform an application composed of microservices, where a microservice runs in its own process and communicates using protocols (e.g., application program interface (API), a Hypertext Transfer Protocol (HTTP) resource API, message service, remote procedure calls (RPC), or Google RPC (gRPC)). Microservices can communicate with one another using a service mesh and be executed in one or more data centers or edge networks. Microservices can be independently deployed using centralized management of these services. The management system may be written in different programming languages and use different data storage technologies. A microservice can be characterized by one or more of: polyglot programming (e.g., code written in multiple languages to capture additional functionality and efficiency not available in a single language), or lightweight container or virtual machine deployment, and decentralized continuous microservice delivery.

In some examples, OS 832 can be Linux^{®}, Windows^{®} Server or personal computer, FreeBSD^{®}, Android^{®}, MacOS^{®}, iOS^{®}, VMware vSphere, openSUSE, RHEL, CentOS, Debian, Ubuntu, or any other operating system. The OS and driver can execute on a processor sold or designed by Intel^{®}, ARM^{®}, AMD^{®}, Qualcomm^{®}, IBM^{®}, Nvidia^{®}, Broadcom^{®}, Texas Instruments^{®}, among others.

While not specifically illustrated, it will be understood that system 800 can include one or more buses or bus systems between devices, such as a memory bus, a graphics bus, interface buses, or others. Buses or other signal lines can communicatively or electrically couple components together, or both communicatively and electrically couple the components. Buses can include physical communication lines, point-to-point connections, bridges, adapters, controllers, or other circuitry or a combination. Buses can include, for example, one or more of a system bus, a Peripheral Component Interconnect (PCI) bus, a Hyper Transport or industry standard architecture (ISA) bus, a small computer system interface (SCSI) bus, a universal serial bus (USB), or an Institute of Electrical and Electronics Engineers (IEEE) standard 1394 bus (Firewire).

In one example, system 800 includes interface 814, which can be coupled to interface 812. In one example, interface 814 represents an interface circuit, which can include standalone components and integrated circuitry. In one example, multiple user interface components or peripheral components, or both, couple to interface 814. Network interface 850 provides system 800 the ability to communicate with remote devices (e.g., servers or other computing devices) over one or more networks. Network interface 850 can include an Ethernet adapter, wireless interconnection components, cellular network interconnection components, USB (universal serial bus), or other wired or wireless standards-based or proprietary interfaces. Network interface 850 can transmit data to a device that is in the same data center or rack or a remote device, which can include sending data stored in memory. Network interface 850 can receive data from a remote device, which can include storing received data into memory. In some examples, packet processing device or network interface device 850 can refer to one or more of: a network interface controller (NIC), a remote direct memory access (RDMA)-enabled NIC, SmartNIC, router, switch, forwarding element, infrastructure processing unit (IPU), or data processing unit (DPU). An example IPU or DPU is described with respect to FIG. 7.

In one example, system 800 includes one or more input/output (I/O) interface(s) 860. I/O interface 860 can include one or more interface components through which a user interacts with system 800. Peripheral interface 870 can include any hardware interface not specifically mentioned above. Peripherals refer generally to devices that connect dependently to system 800.

In one example, system 800 includes storage subsystem 880 to store data in a nonvolatile manner. In one example, in certain system implementations, at least certain components of storage 880 can overlap with components of memory subsystem 820. Storage subsystem 880 includes storage device(s) 884, which can be or include any conventional medium for storing large amounts of data in a nonvolatile manner, such as one or more magnetic, solid state, or optical based disks, or a combination. Storage 884 holds code or instructions and data 886 in a persistent state (e.g., the value is retained despite interruption of power to system 800). Storage 884 can be generically considered to be a "memory," although memory 830 is typically the executing or operating memory to provide instructions to processor 810. Whereas storage 884 is nonvolatile, memory 830 can include volatile memory (e.g., the value or state of the data is indeterminate if power is interrupted to system 800). In one example, storage subsystem 880 includes controller 882 to interface with storage 884. In one example controller 882 is a physical part of interface 814 or processor 810 or can include circuits or logic in both processor 810 and interface 814.

A volatile memory is memory whose state (and therefore the data stored in it) is indeterminate if power is interrupted to the device. A non-volatile memory (NVM) device is a memory whose state is determinate even if power is interrupted to the device.

In an example, system 800 can be implemented using interconnected compute sleds of processors, memories, storages, network interfaces, and other components. High speed interconnects can be based on: Ethernet (IEEE 802.3), remote direct memory access (RDMA), InfiniBand, Internet Wide Area RDMA Protocol (iWARP), Transmission Control Protocol (TCP), User Datagram Protocol (UDP), quick UDP Internet Connections (QUIC), RDMA over Converged Ethernet (RoCE), Peripheral Component Interconnect express (PCIe), Intel QuickPath Interconnect (QPI), Intel Ultra Path Interconnect (UPI), Intel On-Chip System Fabric (IOSF), Omni-Path, Compute Express Link (CXL), HyperTransport, high-speed fabric, NVLink, Advanced Microcontroller Bus Architecture (AMBA) interconnect, OpenCAPI, Gen-Z, Infinity Fabric (IF), Cache Coherent Interconnect for Accelerators (CCIX), 3GPP Long Term Evolution (LTE) (4G), 3GPP 5G, and variations thereof. Data can be copied or stored to virtualized storage nodes or accessed using a protocol such as NVMe over Fabrics (NVMe-oF) or NVMe (e.g., a non-volatile memory express (NVMe) device can operate in a manner consistent with the Non-Volatile Memory Express (NVMe) Specification, revision 1.3c, published on May 24, 2018 ("NVMe specification") or derivatives or variations thereof).

Communications between devices can take place using a network that provides die-to-die communications; chip-to-chip communications; circuit board-to-circuit board communications; and/or package-to-package communications.

In an example, system 800 can be implemented using interconnected compute sleds of processors, memories, storages, network interfaces, and other components. High speed interconnects can be used such as PCIe, Ethernet, or optical interconnects (or a combination thereof).

Examples herein may be implemented in various types of computing and networking equipment, such as switches, routers, racks, and blade servers such as those employed in a data center and/or server farm environment. The servers used in data centers and server farms comprise arrayed server configurations such as rack-based servers or blade servers. These servers are interconnected in communication via various network provisions, such as partitioning sets of servers into Local Area Networks (LANs) with appropriate switching and routing facilities between the LANs to form a private Intranet. For example, cloud hosting facilities may typically employ large data centers with a multitude of servers. A blade comprises a separate computing platform that is configured to perform server-type functions, that is, a "server on a card." Accordingly, a blade includes components common to conventional servers, including a main printed circuit board (main board) providing internal wiring (e.g., buses) for coupling appropriate integrated circuits (ICs) and other components mounted to the board.

Various examples may be implemented using hardware elements, software elements, or a combination of both. In some examples, hardware elements may include devices, components, processors, microprocessors, circuits, circuit elements (e.g., transistors, resistors, capacitors, inductors, and so forth), integrated circuits, ASICs, PLDs, DSPs, FPGAs, memory units, logic gates, registers, semiconductor device, chips, microchips, chip sets, and so forth. In some examples, software elements may include software components, programs, applications, computer programs, application programs, system programs, machine programs, operating system software, middleware, firmware, software modules, routines, subroutines, functions, methods, procedures, software interfaces, APIs, instruction sets, computing code, computer code, code segments, computer code segments, words, values, symbols, or any combination thereof. Determining whether an example is implemented using hardware elements and/or software elements may vary in accordance with any number of factors, such as desired computational rate, power levels, heat tolerances, processing cycle budget, input data rates, output data rates, memory resources, data bus speeds and other design or performance constraints, as desired for a given implementation. A processor can be one or more combination of a hardware state machine, digital control logic, central processing unit, or any hardware, firmware and/or software elements.

Some examples may be implemented using or as an article of manufacture or at least one computer-readable medium. A computer-readable medium may include a non-transitory storage medium to store logic. In some examples, the non-transitory storage medium may include one or more types of computer-readable storage media capable of storing electronic data, including volatile memory or non-volatile memory, removable or non-removable memory, erasable or non-erasable memory, writeable or re-writeable memory, and so forth. In some examples, the logic may include various software elements, such as software components, programs, applications, computer programs, application programs, system programs, machine programs, operating system software, middleware, firmware, software modules, routines, subroutines, functions, methods, procedures, software interfaces, API, instruction sets, computing code, computer code, code segments, computer code segments, words, values, symbols, or any combination thereof.

According to some examples, a computer-readable medium may include a non-transitory storage medium to store or maintain instructions that when executed by a machine, computing device or system, cause the machine, computing device or system to perform methods and/or operations in accordance with the described examples. The instructions may include any suitable type of code, such as source code, compiled code, interpreted code, executable code, static code, dynamic code, and the like. The instructions may be implemented according to a predefined computer language, manner or syntax, for instructing a machine, computing device or system to perform a certain function. The instructions may be implemented using any suitable high-level, low-level, object-oriented, visual, compiled and/or interpreted programming language.

One or more aspects of at least one example may be implemented by representative instructions stored on at least one machine-readable medium which represents various logic within the processor, which when read by a machine, computing device or system causes the machine, computing device or system to fabricate logic to perform the techniques described herein. Such representations, known as "IP cores" may be stored on a tangible, machine readable medium and supplied to various customers or manufacturing facilities to load into the fabrication machines that actually make the logic or processor.

The appearances of the phrase "one example" or "an example" are not necessarily all referring to the same example or embodiment. Any aspect described herein can be combined with any other aspect or similar aspect described herein, regardless of whether the aspects are described with respect to the same figure or element. Division, omission, or inclusion of block functions depicted in the accompanying figures does not infer that the hardware components, circuits, software and/or elements for implementing these functions would necessarily be divided, omitted, or included in embodiments.

Some examples may be described using the expression "coupled" and "connected" along with their derivatives. These terms are not necessarily intended as synonyms for each other. For example, descriptions using the terms "connected" and/or "coupled" may indicate that two or more elements are in direct physical or electrical contact with each other. The term "coupled," however, may also mean that two or more elements are not in direct contact with each other, but yet still co-operate or interact with each other.

The terms "first," "second," and the like, herein do not denote any order, quantity, or importance, but rather are used to distinguish one element from another. The terms "a" and "an" herein do not denote a limitation of quantity, but rather denote the presence of at least one of the referenced items. The term "asserted" used herein with reference to a signal denote a state of the signal, in which the signal is active, and which can be achieved by applying any logic level either logic 0 or logic 1 to the signal. The terms "follow" or "after" can refer to immediately following or following after some other event or events. Other sequences of operations may also be performed according to alternative embodiments. Furthermore, additional operations may be added or removed depending on the particular applications. Any combination of changes can be used and one of ordinary skill in the art with the benefit of this disclosure would understand the many variations, modifications, and alternative embodiments thereof.

Disjunctive language such as the phrase "at least one of X, Y, or Z," unless specifically stated otherwise, is otherwise understood within the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present. Additionally, conjunctive language such as the phrase "at least one of X, Y, and Z," unless specifically stated otherwise, should also be understood to mean X, Y, Z, or any combination thereof, including "X, Y, and/or Z."'

Illustrative examples of the devices, systems, and methods disclosed herein are provided below. An embodiment of the devices, systems, and methods may include any one or more, and any combination of, the examples described below.

Example 1 includes one or more examples, and includes an apparatus comprising: an interface and circuitry coupled to the interface, the circuitry configured to: for packet communications associated with a collective operation to train machine learning (ML) models: utilize a reliable transport protocol for communications from at least one worker node of the collective operation to a switch, wherein the utilize a reliable transport protocol for communications from at least one worker node of the collective operation to the switch comprises store packet receipt state for per-packet communications from the at least one worker node of the collective operation to the switch and utilize a non-reliable transport protocol by the switch to a device that is to perform aggregation of results, wherein the reliable transport protocol comprises a different protocol than that of the non-reliable transport protocol.

Example 2 includes one or more examples, wherein the reliable transport protocol comprises one or more of: remote direct memory access (RDMA), InfiniBand, Transmission Control Protocol (TCP), quick UDP Internet Connections (QUIC), or RDMA over Converged Ethernet (RoCE).

Example 3 includes one or more examples, wherein the utilize the reliable transport protocol for communications from at least one worker node of the collective operation to the switch comprises cause transmission of packet receipt acknowledgement (ACK) messages to the at least one worker node based on non-receipt of a packet.

Example 4 includes one or more examples, wherein the non-reliable transport protocol comprises User Datagram Protocol (UDP).

Example 5 includes one or more examples, wherein the utilize a non-reliable transport protocol comprises track receipt of packet transmissions by the switch to a device that is to perform aggregation of results is based on receipt of aggregation of results from a root switch that includes identifiers of contents of the packet transmissions by the switch to the device.

Example 6 includes one or more examples, wherein the circuitry is to cause re-transmission of a packet, associated with an identifier not received from the device, by the switch to the device.

Example 7 includes one or more examples, and includes a switch system on chip (SoC), wherein the switch SoC includes the interface and the circuitry.

Example 8 includes one or more examples, and includes at least one non-transitory computer-readable medium comprising instructions stored thereon, that if executed by one or more processors, cause the one or more processors to: configure a first network interface device to utilize a reliable transport protocol for communications from at least one worker node of the collective operation to the first network interface device, wherein the utilize a reliable transport protocol for communications from at least one worker node of the collective operation to the first network interface device comprises store packet receipt state for per-packet communications from at least one worker node of the collective operation to the first network interface device and configure the first network interface device to utilize a non-reliable transport protocol for communications to a second network interface device that is to perform aggregation of results, wherein the reliable transport protocol comprises a different protocol than that of the non-reliable transport protocol.

Example 9 includes one or more examples, wherein the reliable transport protocol comprises one or more of: remote direct memory access (RDMA), InfiniBand, Transmission Control Protocol (TCP), quick UDP Internet Connections (QUIC), or RDMA over Converged Ethernet (RoCE).

Example 10 includes one or more examples, wherein the utilize a reliable transport protocol for communications from at least one worker node of the collective operation to the first network interface device comprises cause transmission of packet receipt acknowledgement (ACK) messages to the at least one worker node based on non-receipt of a packet.

Example 11 includes one or more examples, wherein the non-reliable transport protocol comprises User Datagram Protocol (UDP).

Example 12 includes one or more examples, wherein the utilize a non-reliable transport protocol comprises track receipt of packet transmissions by the first network interface device to the second network interface device is based on receipt of aggregation of results from a root switch that includes identifiers of contents of the packet transmissions by the switch to the device.

Example 13 includes one or more examples, wherein the first network interface device is to re-transmit a packet, associated with an identifier not received from the second network interface device, to the second network interface device.

Example 14 includes one or more examples, and includes instructions stored thereon, that if executed by one or more processors, cause the one or more processors to: configure multiple network interface devices to perform collective operations to train machine learning (ML) models by associating logical nodes with the multiple network interface devices.

Example 15 includes one or more examples, and includes a method that includes: a first network interface device utilizing a reliable transport protocol for communications from at least one worker node of the collective operation to the first network interface device, wherein the utilize reliable transport protocol for communications from at least one worker node of the collective operation to the first network interface device comprises store packet receipt state for per-packet communications from the at least one worker node of the collective operation to the first network interface device and the first network interface device utilizing a non-reliable transport protocol for communications to a second network interface device that is to perform aggregation of results at least one worker node, wherein the reliable transport protocol comprises a different protocol than that of the non-reliable transport protocol.

Example 16 includes one or more examples, wherein the reliable transport protocol comprises one or more of: remote direct memory access (RDMA), InfiniBand, Transmission Control Protocol (TCP), quick UDP Internet Connections (QUIC), or RDMA over Converged Ethernet (RoCE).

Example 17 includes one or more examples, wherein the utilizing a reliable transport protocol for communications from at least one worker node of the collective operation to the first network interface device comprises transmitting packet receipt acknowledgement (ACK) messages to the at least one worker node based on non-receipt of a packet.

Example 18 includes one or more examples, wherein the non-reliable transport protocol comprises User Datagram Protocol (UDP).

Example 19 includes one or more examples, wherein the utilizing a non-reliable transport protocol comprises tracking receipt of packet transmissions by the first network interface device to the second network interface device based on receipt of aggregation of results from a root switch that includes identifiers of contents of the packet transmissions by the switch to the device.

Example 20 includes one or more examples, and includes the first network interface device causing re-transmission of a packet, associated with an identifier not received from the second network interface device, to the second network interface device.

## Claims

1. An apparatus comprising:
an interface and
circuitry coupled to the interface, the circuitry configured to:
for packet communications associated with a collective operation to train machine learning (ML) models:
utilize a reliable transport protocol for communications from at least one worker node of the collective operation to a switch, wherein the utilize a reliable transport protocol for communications from at least one worker node of the collective operation to the switch comprises store packet receipt state for per-packet communications from the at least one worker node of the collective operation to the switch and
utilize a non-reliable transport protocol by the switch to a device that is to perform aggregation of results, wherein the reliable transport protocol comprises a different protocol than that of the non-reliable transport protocol.

2. The apparatus of claim 1, wherein
the reliable transport protocol comprises one or more of: remote direct memory access (RDMA), InfiniBand, Transmission Control Protocol (TCP), quick UDP Internet Connections (QUIC), or RDMA over Converged Ethernet (RoCE) and
the non-reliable transport protocol comprises User Datagram Protocol (UDP).

3. The apparatus of claim 1, wherein the utilize the reliable transport protocol for communications from at least one worker node of the collective operation to the switch comprises cause transmission of packet receipt acknowledgement (ACK) messages to the at least one worker node based on non-receipt of a packet.

4. The apparatus of claim 1, wherein the circuitry is to cause re-transmission of a packet, associated with an identifier not received from the device, by the switch to the device.

5. The apparatus of claim 1, comprising a switch system on chip (SoC), wherein the switch SoC includes the interface and the circuitry.

6. The apparatus of any of claims 1-5, wherein the utilize a non-reliable transport protocol comprises track receipt of packet transmissions by the switch to a device that is to perform aggregation of results is based on receipt of aggregation of results from a root switch that includes identifiers of contents of the packet transmissions by the switch to the device.

7. A method comprising:
a first network interface device utilizing a reliable transport protocol for communications from at least one worker node of the collective operation to the first network interface device, wherein the utilize reliable transport protocol for communications from at least one worker node of the collective operation to the first network interface device comprises store packet receipt state for per-packet communications from the at least one worker node of the collective operation to the first network interface device and
the first network interface device utilizing a non-reliable transport protocol for communications to a second network interface device that is to perform aggregation of results at least one worker node, wherein the reliable transport protocol comprises a different protocol than that of the non-reliable transport protocol.

8. The method of claim 7, wherein
the reliable transport protocol comprises one or more of: remote direct memory access (RDMA), InfiniBand, Transmission Control Protocol (TCP), quick UDP Internet Connections (QUIC), or RDMA over Converged Ethernet (RoCE).

9. The method of claim 7, wherein
the non-reliable transport protocol comprises User Datagram Protocol (UDP)

10. The method of claim 7, wherein the utilizing a reliable transport protocol for communications from at least one worker node of the collective operation to the first network interface device comprises transmitting packet receipt acknowledgement (ACK) messages to the at least one worker node based on non-receipt of a packet.

11. The method of claim 7, wherein the utilizing a non-reliable transport protocol comprises tracking receipt of packet transmissions by the first network interface device to the second network interface device based on receipt of aggregation of results from a root switch that includes identifiers of contents of the packet transmissions by the switch to the device.

12. The method of claim 7, wherein the utilizing a non-reliable transport protocol comprises tracking receipt of packet transmissions is based on receipt of aggregation of results from a root switch that includes identifiers of contents of the packet transmissions by the switch to the device.

13. The method of any of claims 7-12, comprising:
the first network interface device causing re-transmission of a packet, associated with an identifier not received from the second network interface device, to the second network interface device.

14. A computer-readable medium comprising instructions that if executed, by one or more processors, implement a method or realise an apparatus as claimed in any preceding claim.
